(19) Europäisches Patentamt
European Patent Office
Office européen des brevets

(11) **EP 4 260 454 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **21807035.7**

(22) Anmeldetag: **05.11.2021**

(51) Internationale Patentklassifikation (IPC):
*H02P 29/032* (2016.01)  *H02P 29/60* (2016.01)
*B60L 3/00* (2019.01)

(52) Gemeinsame Patentklassifikation (CPC):
**H02P 29/60; B60L 3/0061; H02P 29/032;**
B60L 2240/425; B60L 2240/80; B60L 2260/50;
B60L 2260/56; Y02T 10/64

(86) Internationale Anmeldenummer:
**PCT/EP2021/080743**

(87) Internationale Veröffentlichungsnummer:
**WO 2022/122262 (16.06.2022 Gazette 2022/24)**

(54) **ELEKTRISCHES SYSTEM UND VERFAHREN UND VORRICHTUNG ZUM BESTIMMEN EINES WERTEVERLAUFS EINER STEUERGRÖSSE**

ELECTRICAL SYSTEM AND METHOD AND APPARATUS FOR DETERMINING A VALUE PROFILE OF A CONTROLLED VARIABLE

SYSTÈME ÉLECTRIQUE ET PROCÉDÉ ET APPAREIL PERMETTANT DE DÉTERMINER UN PROFIL DE VALEUR D'UNE VARIABLE COMMANDÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2020 DE 102020215464**

(43) Veröffentlichungstag der Anmeldung:
**18.10.2023 Patentblatt 2023/42**

(73) Patentinhaber: **Robert Bosch GmbH**
**70442 Stuttgart (DE)**

(72) Erfinder:
• **HAHN, Christian**
 **90419 Nuernberg (DE)**
• **HIRSCH, Michele**
 **73730 Esslingen (DE)**
• **BECKER, Markus**
 **71732 Tamm (DE)**

(56) Entgegenhaltungen:
**WO-A1-2019/219214    DE-A1- 102016 220 536**
**US-B2- 10 151 301**

EP 4 260 454 B1

**Beschreibung**

Die vorliegende Erfindung betrifft ein Verfahren zum Bestimmen eines Werteverlaufs einer Steuergröße eines elektrischen Systems sowie eine entsprechende Vorrichtung. Weiter betrifft die Erfindung ein elektrisches System. Das elektrische System kann insbesondere ein elektrischer Antrieb sein oder einen elektrischen Antrieb umfassen.

Stand der Technik

Die Druckschrift DE 10 2016 220536 A1 offenbart ein Verfahren zur Begrenzung der Temperatur in einer elektrischen Maschine bereitzustellen, wobei nach Überschreiten einer vorbestimmten Dauertemperatur kurzzeitig das Abrufen höherer Antriebsleistungen zugelassen wird und es wird vorgeschlagen, die Temperatur $\vartheta$ in der elektrischen Maschine zu bestimmen, und nach Überschreiten einer vorbestimmten Dauertemperatur $\vartheta$ eine weitere Temperaturerhöhung in einer von einer Steuerung berechneten Zeitspanne zuzulassen und nach Ablauf dieser Zeitspanne die Leistung und/oder das Drehmoment und/oder mindestens einen Phasenstrom der elektrischen Maschine zu verringern.

Die Druckschriften US 10 151 301 B2, WO 2019/219214 A1 offenbaren Verfahren zum Bestimmen eines Werteverlaufs einer Steuergröße. Da beim Betrieb eines elektrischen Systems, etwa eines elektrischen Antriebs, Verluste auftreten, erwärmen sich Komponenten des elektrischen Systems, zum Beispiel Leistungsmodule eines Wechselrichters, oder ein Rotor oder ein Stator einer Maschine. Um ein Überhitzen und eine dadurch entstehende Beschädigung von temperatursensitiven Komponenten zu vermeiden, werden die auftretenden Temperaturen mittels Sensoren und Modellen überwacht.

Als Eigenschutzmaßnahmen werden Derating- bzw. Abregelungs-Verfahren eingesetzt und durchgeführt. Hierunter ist zu verstehen, dass der Betriebszustand der Komponenten des elektrischen Systems modifiziert bzw. abgeregelt wird, um das Überschreiten von kritischen Temperaturen zu vermeiden.

Um eine geeignete Betriebsstrategie des elektrischen Antriebs zu wählen, ist es vorteilhaft, wenn die Steuereinheit (englisch: vehicle control unit, VCU) (z.B. im Fahrzeug) von einem Steuergerät des elektrischen Antriebs Informationen erhält, welche Leistung dem elektrischen Antrieb in einem zukünftigen Zeitintervall, etwa in den nächsten 1, 5 oder 10 Sekunden, abgefordert werden kann, so dass die Schutzmaßnahmen gerade noch nicht aktiviert werden. In Abgrenzung zu einer Reichweitenprädiktion oder einer modellprädiktiven Regelung handelt es sich hierbei um eine Prädiktion der Performance des elektrischen Antriebs.

Hierzu existieren verschiedene Vorwärtsmodellierungs-Strategien. So kann ausgehend vom aktuellen Betriebszustand für das zukünftige Zeitintervall berechnet werden, ob eine Abregelung zu erwarten ist. Hierbei erhält das übergeordnete Steuergerät jedoch lediglich die Information, ob der aktuelle Betriebszustand beibehalten werden kann oder nicht. Eine möglicherweise erforderliche Anpassung des Betriebszustands lässt sich nicht ableiten.

Weiter kann ausgehend vom aktuellen thermischen Zustand unter Annahme maximaler Belastung während des zukünftigen Zeitintervalls berechnet werden, welche Temperaturen mit dieser Last erreicht werden würden. Aus einer vorgegebenen Derating-Charakteristik wird der zugehörige beschränkte Lastzustand ermittelt. Allerdings wird hierbei der iterative Charakter des Deratings, d. h. die Rückkopplung der momentanen Temperatur auf die momentan zulässige Last, nicht berücksichtigt. Die Prädiktion ist daher meist zu konservativ.

Die Vorwärtsmodellierung kann iterativ mit verschiedenen Lastfällen wiederholt werden, bis eine Grenztemperatur eingehalten wird, was jedoch aufwändig ist. Falls das Derating-Verfahren eingreift, kann der Lastfall konsistent mit den Derating-Bedingungen iteriert werden, was jedoch ebenfalls sehr aufwändig ist.

Ein modellprädiktiver Ansatz ist bekannt aus Wallscheid et al., "Derating of Automotive Drive Systems Using Model Predictive Control", 4th Symposium on Predictive Control of Electrical Drives and Power Electronics, 2017. Eine Voraussetzung ist, dass Fahrstrategie und Derating gemeinsam gesteuert werden, was oftmals nicht der Fall ist, da der elektrische Antrieb nicht die Betriebs- oder Fahrstrategie verantwortet und die übergeordnete VCU wiederum nicht den Eigenschutz.

Schließlich kann künstliche Intelligenz eingesetzt werden, was jedoch aufwändige Datengenerierung und Erfassung erfordert, da die prädizierten Lasten nur als Zusatz-Information in eine Fahrstrategie eingehen, aber oft nicht konkret angefahren werden. Für die Trainingsdaten müssten daher aufwändige Sonderprofile gefahren werden.

Offenbarung der Erfindung

Die Erfindung stellt ein Verfahren und eine Vorrichtung zum Bestimmen eines Werteverlaufs einer Steuergröße eines elektrischen Systems, sowie ein elektrisches System mit den Merkmalen der unabhängigen Patentansprüche bereit.

Bevorzugte Ausführungsformen sind Gegenstand der jeweiligen Unteransprüche.

Gemäß einem ersten Aspekt betrifft die Erfindung demnach ein Verfahren zum Bestimmen eines Werteverlaufs einer Steuergröße eines elektrischen Systems in einem vorgegebenen Zeitintervall. Das elektrische System wird mit der

**EP 4 260 454 B1**

Steuergröße angesteuert. Aufgrund des Systemverhaltens des elektrischen Systems stellt sich in Abhängigkeit von der Steuergröße eine Ausgangsgröße in dem elektrischen System ein. In Abhängigkeit von einem Istwert der Ausgangsgröße zu einem Anfangszeitpunkt des Zeitintervalls und in Abhängigkeit davon, dass die Steuergröße innerhalb des Zeitintervalls den Wert Null annimmt, wird ein Wert der Ausgangsgröße zu einem Endzeitpunkt des vorgegebenen Zeitintervalls ermittelt. Es wird eine erste Differenz eines ersten vorgegebenen Wertes der Ausgangsgröße zum Endzeitpunkt und des ermittelten Wertes der Ausgangsgröße zu dem Endzeitpunkt ermittelt. Weiter wird mindestens eine zweite Differenz mindestens eines zweiten vorgegebenen Wertes der Ausgangsgröße zum Endzeitpunkt und des ermittelten Wertes der Ausgangsgröße zu dem Endzeitpunkt ermittelt. Ein Werteverlauf der Steuergröße in dem Zeitintervall wird vorgegeben, wobei der Werteverlauf von einem Endwert zum Endzeitpunkt abhängt und durch Angabe des Endwerts eindeutig bestimmt ist. Ein erster zulässiger Wert der Steuergröße wird derart ermittelt, dass beim Ansteuern des elektrischen Systems der Wert der Ausgangsgröße zu dem Endzeitpunkt gleich der ermittelten ersten Differenz ist, in Abhängigkeit davon, dass die Steuergröße innerhalb des Zeitintervalls den vorgegebenen Werteverlauf annimmt, wobei der Endwert gleich dem ersten zulässigen Wert ist. Mindestens ein zweiter zulässiger Wert der Steuergröße wird derart ermittelt, dass beim Ansteuern des elektrischen Systems der Wert der Ausgangsgröße zu dem Endzeitpunkt gleich der ermittelten zweiten Differenz ist, in Abhängigkeit davon, dass die Steuergröße innerhalb des Zeitintervalls den vorgegebenen Werteverlauf annimmt, wobei der Endwert gleich dem zweiten zulässigen Wert ist. Anhand des ersten zulässigen Wertes der Steuergröße für den ersten vorgegebenen Wert der Ausgangsgröße und anhand des mindestens einen zweiten zulässigen Wertes der Steuergröße für den mindestens einen zweiten vorgegebenen Wert der Ausgangsgröße wird in Abhängigkeit von der Ausgangsgröße eine Kurve der zulässigen Werte der Steuergröße ermittelt. Ein Schnittpunkt der ermittelten Kurve und einer vorgegebenen Derating-Funktion wird ermittelt, wobei die Derating-Funktion eine in einem Derating-Verfahren maximal zulässige Steuergröße in Abhängigkeit von der Ausgangsgröße beschreibt. Der Werteverlauf der Steuergröße innerhalb des Zeitintervalls wird als derjenige Werteverlauf bestimmt, für den der Endwert des Werteverlaufs den Wert der Steuergröße im Schnittpunkt annimmt.

Gemäß einem zweiten Aspekt betrifft die Erfindung eine Vorrichtung zum Bestimmen eines Werteverlaufs einer Steuergröße eines elektrischen Systems in einem vorgegebenen Zeitintervall, wobei das elektrische System mit der Steuergröße ansteuerbar ist und wobei sich aufgrund eines Systemverhaltens des elektrischen Systems in Abhängigkeit von der Steuergröße eine Ausgangsgröße in dem elektrischen System einstellt. Die Vorrichtung umfasst eine Recheneinrichtung, welche einen Wert der Ausgangsgröße zu einem Endzeitpunkt des vorgegebenen Zeitintervalls ermittelt, in Abhängigkeit von einem Istwert der Ausgangsgröße zu einem Anfangszeitpunkt des Zeitintervalls, und in Abhängigkeit davon, dass die Steuergröße innerhalb des Zeitintervalls den Wert Null annimmt. Weiter ermittelt die Recheneinrichtung eine erste Differenz eines ersten vorgegebenen Wertes der Ausgangsgröße zum Endzeitpunkt und des ermittelten Wertes der Ausgangsgröße zu dem Endzeitpunkt. Weiter ermittelt die Recheneinrichtung mindestens eine zweite Differenz mindestens eines zweiten vorgegebenen Wertes der Ausgangsgröße zum Endzeitpunkt und des ermittelten Wertes der Ausgangsgröße zu dem Endzeitpunkt. Die Recheneinrichtung gibt einen Werteverlauf der Steuergröße in dem Zeitintervall vor, wobei der Werteverlauf von einem Endwert zum Endzeitpunkt abhängt und durch Angabe des Endwerts eindeutig bestimmt ist. Die Recheneinrichtung ermittelt einen ersten zulässigen Wert der Steuergröße derart, dass beim Ansteuern des elektrischen Systems der Wert der Ausgangsgröße zu dem Endzeitpunkt gleich der ermittelten ersten Differenz ist, in Abhängigkeit davon, dass die Steuergröße innerhalb des Zeitintervalls den vorgegebenen Werteverlauf annimmt, wobei der Endwert gleich dem ersten zulässigen Wert ist. Die Recheneinrichtung ermittelt mindestens einen zweiten zulässigen Wert der Steuergröße derart, dass beim Ansteuern des elektrischen Systems der Wert der Ausgangsgröße zu dem Endzeitpunkt gleich der ermittelten zweiten Differenz ist, in Abhängigkeit davon, dass die Steuergröße innerhalb des Zeitintervalls den vorgegebenen Werteverlauf annimmt, wobei der Endwert gleich dem zweiten zulässigen Wert ist. Die Recheneinrichtung ermittelt eine Kurve der zulässigen Werte der Steuergröße in Abhängigkeit von der Ausgangsgröße, anhand des ersten zulässigen Wertes der Steuergröße für den ersten vorgegebenen Wert der Ausgangsgröße und anhand des mindestens einen zweiten zulässigen Wertes der Steuergröße für den mindestens einen zweiten vorgegebenen Wert der Ausgangsgröße. Die Recheneinrichtung ermittelt einen Schnittpunkt der ermittelten Kurve und einer vorgegebenen Derating-Funktion. Die Derating-Funktion beschreibt eine in einem Derating-Verfahren maximal zulässige Steuergröße in Abhängigkeit von der Ausgangsgröße. Die Recheneinrichtung bestimmt den Werteverlauf der Steuergröße innerhalb des Zeitintervalls als denjenigen Werteverlauf, für den der Endwert des Werteverlaufs den Wert der Steuergröße im Schnittpunkt annimmt. Weiter umfasst die Vorrichtung einen Schnittstelle, welche dazu ausgebildet ist, den bestimmten Werteverlauf der Steuergröße zum Steuern des elektrischen Systems auszugeben.

Gemäß einem dritten Aspekt betrifft die Erfindung ein elektrisches System, mit einer erfindungsgemäßen Vorrichtung zum Bestimmen eines Werteverlaufs einer Steuergröße des elektrischen Systems. Das elektrische System umfasst weiter eine Steuereinrichtung, welche dazu ausgebildet ist, das elektrische System innerhalb des Zeitintervalls in Abhängigkeit von dem bestimmten Werteverlauf der Steuergröße zu steuern.

Vorteile der Erfindung

Erfindungsgemäß wird ein Werteverlauf einer Steuergröße prädiziert, welcher für das vorgegebene Zeitintervall zum Steuern des elektrischen Systems verwendet werden kann. Der Anfangszeitpunkt des Zeitintervalls entspricht dabei dem momentanen Zeitpunkt bzw. einem Startpunkt des Ansteuerverfahrens. Der Werteverlauf der Steuergröße wird derart berechnet, dass verhindert wird, dass ein Derating-Verfahren einsetzt bzw. eine Begrenzung aufgrund des aktiven Eingreifens des Deratings stattfindet.

Das Verfahren ermittelt den maximal möglichen Lastfall, den das elektrische System in dem Zeitintervall ohne Konflikt mit einem Derating zur Verfügung stellen kann. Das Verfahren erlaubt die korrekte Berücksichtigung von beliebigen Deratingkurven durch eine geeignete und effiziente Rückwärtsmodellierung des gerade noch möglichen Lastzustandes. Der Werteverlauf der Steuergröße soll somit auch unter Berücksichtigung des Derating-Verhaltens in dem gesamten Zeitintervall wie ermittelt zum Steuern eingesetzt werden können. Eine unvorhergesehene Änderung der Steuergrößen aufgrund des Derating-Verhaltens wird dadurch vermieden.

Durch das Ermitteln des Wertes der Ausgangsgröße zu dem Endzeitpunkt, wobei die Steuergröße innerhalb des Zeitintervalls den Wert Null annimmt, wird ein Abklingvorgang im lastlosen Fall beschrieben, d. h. unter der Annahme, dass keine weitere Last während des Zeitintervalls angelegt wird.

Das Ermitteln der ersten Differenz bzw. zweiten Differenz entspricht einer jeweiligen Reserve, etwa einer Temperaturreserve, welche im Vergleich zum lastlosen Fall besteht und somit für das Anlegen einer Last innerhalb des Zeitintervalls verbleibt.

Der vorgegebene Werteverlauf der Steuergröße kann ein konstanter Sprung sein. In diesem Fall wird der Wert der Steuergröße zum Anfangszeitpunkt auf einen festen Wert eingestellt und verbleibt während des Zeitintervalls bei dem eingestellten Wert. Ein Lastsprung kann durch eine Heaviside-Funktion mit skalierbarem Vorfaktor beschrieben werden. Die Berechnung ist dadurch leicht und schnell durchführbar.

Der vorgegebene Werteverlauf der Steuergröße kann auch einer vorgegebenen Funktion folgen. Beispielsweise kann der Wert der Steuergröße linear oder quadratisch ansteigen. Der Werteverlauf ist somit linear oder parabelförmig.

Der Werteverlauf kann gemäß einer Ausführungsform des Verfahrens auch vom Startwert der Steuergröße zum Anfangszeitpunkt des Zeitintervalls abhängen. Entsprechend kann auch der bestimmte Werteverlauf der Steuergröße innerhalb des Zeitintervalls von einem Startwert der Steuergröße zum Anfangszeitpunkt des Zeitintervalls abhängen.

Gemäß einer Ausführungsform des Verfahrens wird der ermittelte Werteverlauf der Steuergröße einem übergeordneten System als Eingangsinformation für die Betriebs- oder Fahrstrategie zur Verfügung gestellt. Insbesondere betrifft die Erfindung ein Verfahren zum Ansteuern des elektrischen Systems, wobei der ermittelte Werteverlauf der Steuergröße zum Ansteuern des elektrischen Systems verwendet wird.

Gemäß einer Ausführungsform des Verfahrens wird das elektrische System derart angesteuert, dass die Steuergröße dem bestimmten Werteverlauf innerhalb des Zeitintervalls folgt. Es kann jedoch auch vorgesehen sein, die Steuergröße derart zu steuern, dass diese innerhalb des Zeitintervalls für jeden Zeitpunkt kleiner oder gleich dem entsprechenden Wert des bestimmten Werteverlaufs ist. Der Werteverlauf gibt somit einen maximal zulässigen Verlauf vor, welcher nicht überschritten, jedoch unterschritten werden darf.

Das Verfahren ist ohne Iterationen durchführbar. Das Verfahren ist schnell, sehr recheneffizient und genau und daher für die gleichzeitige Berücksichtigung von mehreren zu schützenden Komponenten, etwa im Antriebsstrang auf dem Micro-Controller eines Wechselrichters geeignet, ohne dass eine deutliche Rechenlast oder Speicherbedarfs-Erhöhung anfällt. Der Aufwand zur Modellerstellung und Bedatung ist gering.

Die mindestens eine Steuergröße (oder Regelgröße) kann beispielweise eine Stromstärke oder Spannung sein. Weiter kann die Steuergröße auch ein Drehmoment sein, etwa im Fall, dass die Steuergröße von der Fahrstrategie der übergeordneten VCU kommt, welche zum Ansteuern des elektrischen Systems verwendet wird.

Gemäß einer Ausführungsform des Verfahrens ist die zu schützende Ausgangsgröße in dem elektrischen System eine Temperatur, ein Druck oder dergleichen.

Gemäß einer weiteren Ausführungsform des Verfahrens wird die Kurve der zulässigen Werte der Steuergröße durch Interpolation des ersten zulässigen Wertes der Steuergröße für den ersten vorgegebenen Wert der Ausgangsgröße und des mindestens einen zweiten zulässigen Wertes der Steuergröße für den mindestens einen zweiten vorgegebenen Wert der Ausgangsgröße ermittelt.

Gemäß einer weiteren Ausführungsform des Verfahrens wird die Abhängigkeit der Ausgangsgröße von der Steuergröße durch ein lineares oder linearisierbares Modell beschrieben. Das Verfahren ist erfindungsgemäß auf alle elektrischen Systeme anwendbar, die zu limitierende Zustandsgrößen bzw. Ausgangsgrößen haben, die sich mit einem linearen oder linearisierbaren Modell beschreiben lassen und für die ein Derating-Verfahren, etwa in Form einer Kurve (Derating-Kurve), vorgegeben ist. Gemäß der weiteren Ausführungsform kann die Kurve einen Zusammenhang zwischen der Last oder Anregungsgröße und der zu schützenden Ausgangsgröße beschreiben. Bei dem linearen oder linearisierbaren Modell kann es sich um eine Beschreibung eines zeitinvarianten Verhaltens (englisch: linear time invariant, LTI) oder eines linear parametervarianten Verhaltens (englisch: linear parameter variant, LPV) handeln.

Gemäß einer weiteren Ausführungsform des Verfahrens ist der Werteverlauf sprunghaft, wobei für einen vorgegebenen Wert der Ausgangsgröße der zulässige Wert $u_{allowed}$ der Steuergröße durch folgende Formel berechnet wird:

$$u_{allowed} = \frac{\Delta y}{\Phi(t_1)},$$

wobei $\Delta y$ die ermittelte Differenz und $\Phi(t_1)$ der Wert einer dem linearen oder linearisierbaren Modell zugeordneten Sprungantwort zum Endzeitpunkt $t_1$ ist.

Gemäß einer weiteren Ausführungsform des Verfahrens ist die Steuergröße kleiner als ein aufgrund von Systembegrenzungen des elektrischen Systems vorgegebener Schwellenwert. Der Werteverlauf der Steuergröße innerhalb des Zeitintervalls wird als derjenige Werteverlauf bestimmt, für den der Endwert des Werteverlaufs den vorgegebenen Schwellenwert annimmt, falls der erste zulässige Wert der Steuergröße und der mindestens eine zweite zulässige Wert der Steuergröße größer als der vorgegebene Schwellenwert ist.

Gemäß einer weiteren Ausführungsform des Verfahrens ist das elektrische System ein elektrischer Antrieb, wobei die mindestens eine Ausgangsgröße eine Temperatur von mindestens einer Komponente des elektrischen Systems umfasst.

Gemäß einer weiteren Ausführungsform des Verfahrens wird ein Phasenstrom oder Drehmoment des elektrischen Antriebs in Abhängigkeit von dem bestimmten Werteverlauf der Steuergröße gesteuert.

Gemäß einer weiteren Ausführungsform der Vorrichtung ist die Recheneinrichtung dazu ausgebildet, die Kurve der zulässigen Werte der Steuergröße durch Interpolation des ersten zulässigen Wertes der Steuergröße für den ersten vorgegebenen Wert der Ausgangsgröße und des mindestens einen zweiten zulässigen Wertes der Steuergröße für den mindestens einen zweiten vorgegebenen Wert der Ausgangsgröße zu ermitteln.

Kurze Beschreibung der Zeichnungen

Es zeigen:

Figur 1    ein schematisches Blockdiagramm einer Vorrichtung zum Bestimmen eines Werteverlaufs einer Steuergröße eines elektrischen Systems gemäß einer Ausführungsform der Erfindung;

Figur 2    ein schematisches Blockdiagramm eines elektrischen Antriebs mit einer Vorrichtung zum Bestimmen eines Werteverlaufs einer Steuergröße des elektrischen Systems gemäß einer Ausführungsform der Erfindung;

Figur 3    ein lineares oder linearisierbares Modell zur Beschreibung eines Verhaltens von Komponenten der elektrischen Maschine;

Figur 4    ein schematisches Blockdiagramm zur Erläuterung des linearen Modells;

Figur 5    eine Darstellung eines skalierbaren Lastsprungs;

Figur 6    eine schematische Illustration einer Derating-Kurve;

Figur 7    ein Flussdiagramm eines Verfahrens zum Bestimmen eines Werteverlaufs einer Steuergröße eines elektrischen Systems gemäß einer Ausführungsform der Erfindung;

Figur 8    eine Erläuterung der Bestimmung der Steuergröße mittels der Berechnung eines Schnittpunkts einer Derating-Kurve und einer ermittelten Kurve;

Figur 9    ein weiteres Flussdiagramm eines Verfahrens zum Bestimmen eines Werteverlaufs einer Steuergröße eines elektrischen Systems gemäß einer Ausführungsform der Erfindung;

Figur 10    einen beispielhaften Verlauf einer Steuergröße und einer Ausgangsgröße bis zum Startzeitpunkt des Zeitintervalls;

Figur 11    einen beispielhaften Verlauf einer Steuergröße und einer Ausgangsgröße mit prädiziertem Verlauf im vorgegebenen Zeitintervall;

Figur 12    einen beispielhaften Verlauf einer Steuergröße und einer Ausgangsgröße mit prädiziertem Verlauf im vorgegebenen Zeitintervall für verschiedene Schwellwerte;

Figur 13    einen beispielhaften Verlauf einer Ausgangsgröße als Funktion der Zeit;

Figur 14    eine Erläuterung der Bestimmung der Steuergröße mittels der Berechnung eines Schnittpunkts einer Derating-Kurve und einer ermittelten Kurve für den Fall eines Phasenstroms; und

Figur 15    einen beispielhaften Verlauf einer Temperatur und eines Phasenstroms als Funktion der Zeit.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

Beschreibung der Ausführungsbeispiele

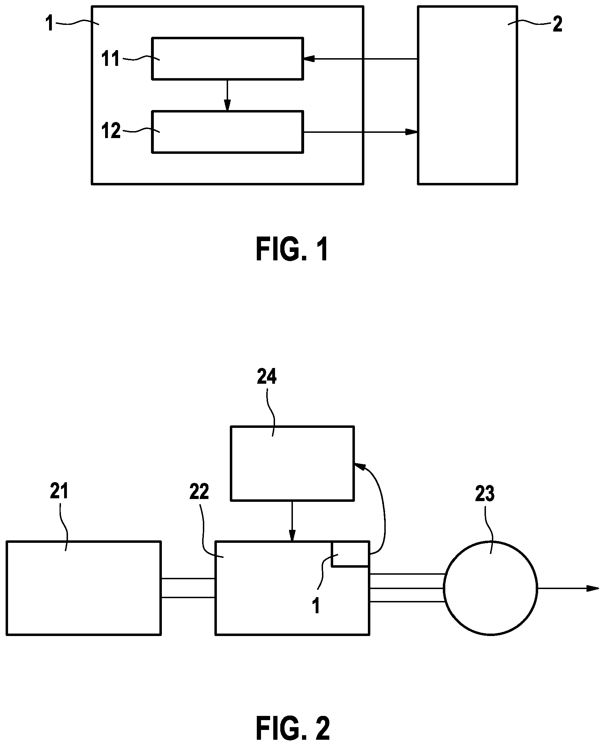

Figur 1 zeigt ein schematisches Blockdiagramm einer Vorrichtung 1 zum Bestimmen eines Werteverlaufs einer Steuergröße eines elektrischen Systems 2 in einem vorgegebenen Zeitintervall.

Bei dem elektrischen System 2 kann es sich etwa um einen elektrischen Antrieb handeln. Das elektrische System 2 wird unter Verwendung eines Derating-Verfahrens betrieben. Das elektrische System 2 ist mit einer Steuergröße ansteuerbar, wobei sich aufgrund eines Systemverhaltens des elektrischen Systems 2 in Abhängigkeit von der Steuergröße eine Ausgangsgröße in dem elektrischen System 2 einstellt.

Die Vorrichtung 1 umfasst eine Recheneinrichtung 11, welche mit dem elektrischen System 2 gekoppelt ist und von diesem momentane Werte von mindestens einer Ausgangsgröße empfängt. Die mindestens eine Ausgangsgröße hängt von einem Betriebszustand mindestens einer Komponente des elektrischen Systems 2 ab und umfasst beispielsweise eine Temperatur von Komponenten des elektrischen Systems 2. Bei den Komponenten des elektrischen Systems kann es sich etwa um temperatursensitive Halbleiterbauelemente wie IGBTs handeln. Die Recheneinrichtung 11 kann einen oder mehrere Mikroprozessoren sowie Speicher umfassen.

Die Recheneinrichtung 11 bestimmt einen Werteverlauf einer Steuergröße für das vorgegebenes Zeitintervall, etwa 1 Sekunde, 5 Sekunden oder 10 Sekunden. Bei der Steuergröße kann sich etwa um einen Phasenstrom für einen elektrischen Antrieb, eine Spannung, ein daraus abgeleitetes Drehmoment oder dergleichen handeln. Ein Anfangszeitpunkt $t_0$ des Zeitintervalls kann einem momentanen Zeitpunkt oder einem in der Zukunft liegenden Zeitpunkt entsprechen.

Die Recheneinrichtung 11 berechnet die Abhängigkeit der Ausgangsgröße von der Steuergröße anhand eines linearen oder linearisierbaren Modells.

Die Recheneinrichtung 11 ermittelt einen Wert der Ausgangsgröße zu einem Endzeitpunkt $t_1$ des vorgegebenen Zeitintervalls, in Abhängigkeit von einem Istwert der Ausgangsgröße zu dem Anfangszeitpunkt $t_0$ des Zeitintervalls, und in Abhängigkeit davon, dass die Steuergröße innerhalb des Zeitintervalls den Wert Null annimmt.

Weiter ermittelt die Recheneinrichtung 11 eine erste Differenz eines ersten vorgegebenen Wertes der Ausgangsgröße zum Endzeitpunkt $t_1$ und des ermittelten Wertes der Ausgangsgröße zu dem Endzeitpunkt $t_1$. Weiter ermittelt die Recheneinrichtung 11 mindestens eine zweite Differenz mindestens eines zweiten vorgegebenen Wertes der Ausgangsgröße zum Endzeitpunkt $t_1$ und des ermittelten Wertes der Ausgangsgröße zu dem Endzeitpunkt $t_1$. Die Recheneinrichtung 11 gibt einen Werteverlauf der Steuergröße in dem Zeitintervall vor, wobei der Werteverlauf von einem Endwert zum Endzeitpunkt $t_1$ abhängt und durch Angabe des Endwerts eindeutig bestimmt ist. Die Recheneinrichtung 11 ermittelt einen ersten zulässigen Wert der Steuergröße derart, dass beim Ansteuern des elektrischen Systems 2 der Wert der Ausgangsgröße zu dem Endzeitpunkt $t_1$ gleich der ermittelten ersten Differenz ist, in Abhängigkeit davon, dass die Steuergröße innerhalb des Zeitintervalls den vorgegebenen Werteverlauf annimmt, wobei der Endwert gleich dem ersten zulässigen Wert ist. Die Recheneinrichtung 11 ermittelt mindestens einen zweiten zulässigen Wert der Steuergröße derart, dass beim Ansteuern des elektrischen Systems 2 der Wert der Ausgangsgröße zu dem Endzeitpunkt $t_1$ gleich der ermittelten zweiten Differenz ist, in Abhängigkeit davon, dass die Steuergröße innerhalb des Zeitintervalls den vorgegebenen Werteverlauf annimmt, wobei der Endwert gleich dem zweiten zulässigen Wert ist. Die Recheneinrichtung 11 ermittelt eine Kurve der zulässigen Werte der Steuergröße in Abhängigkeit von der Ausgangsgröße, anhand des ersten zulässigen Wertes der Steuergröße für den ersten vorgegebenen Wert der Ausgangsgröße und anhand des mindestens einen zweiten zulässigen Wertes der Steuergröße für den mindestens einen zweiten vorgegebenen Wert der Ausgangsgröße. Die Recheneinrichtung 11 ermittelt einen Schnittpunkt der ermittelten Kurve und einer vorgegebenen Derating-Funktion. Die Derating-Funktion beschreibt eine in einem Derating-Verfahren maximal zulässige Steuergröße in Abhängigkeit von der Ausgangsgröße. Die Recheneinrichtung 11 bestimmt den Werteverlauf der Steuergröße innerhalb des Zeitintervalls als denjenigen Werteverlauf, für den der Endwert des Werteverlaufs den Wert der Steuergröße im Schnittpunkt annimmt.

Der bestimmte zeitliche Werteverlauf der Steuergröße wird über eine drahtlose oder drahtgebundene Schnittstelle 12 an ein Steuergerät der elektrischen Maschine 2 ausgegeben, welche die elektrische Maschine 2 bzw. Komponenten der elektrischen Maschine 2 unter Berücksichtigung des ermittelten Werteverlaufs der Steuergröße steuert.

Figur 2 zeigt ein schematisches Blockdiagramm eines elektrischen Antriebs 2 als elektrisches System 2 mit einer oben beschriebenen Vorrichtung 1. Der elektrische Antrieb 2 umfasst eine Gleichstrombatterie 21, welche mit einem Wechselrichter 22 gekoppelt ist, welcher wiederum eine elektrischen Maschine 23 versorgt, die ein Drehmoment Tq bereitstellt. In den Wechselrichter 22 ist die Vorrichtung 1 integriert, welche den zeitlichen Werteverlauf der Steuergröße an eine Steuereinrichtung (VCU) 24 ausgibt. Die Steuereinrichtung 24 steuert den Wechselrichter 22 der elektrischen Maschine 2 unter Berücksichtigung des zeitlichen Werteverlaufs der Steuergröße. Der ermittelte Werteverlauf der Steuergröße kann direkt zum Ansteuern verwendet werden. Alternativ kann der ermittelte Werteverlauf der Steuergröße einen Maximalverlauf vorgeben, welcher nicht überschritten werden darf.

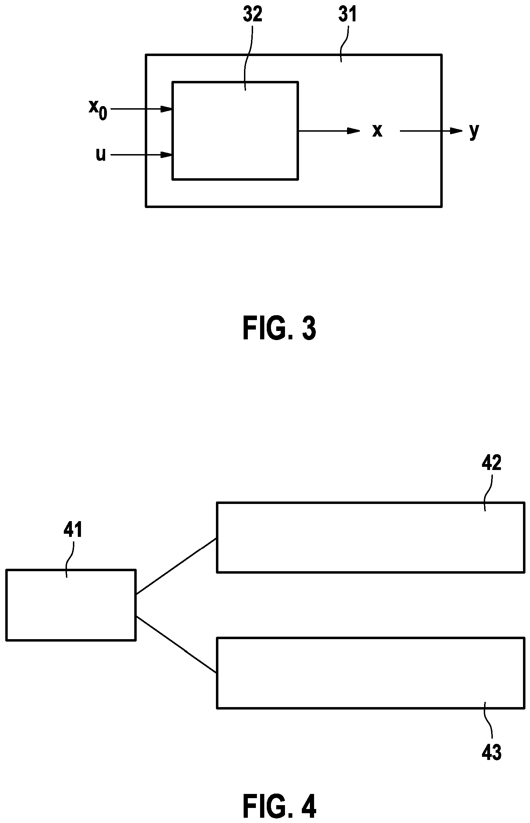

Figur 3 zeigt ein lineares oder linearisierbares Modell 31 zur Beschreibung eines Verhaltens von Komponenten der elektrischen Maschine 2. Das lineare Modell 31 kann beispielsweise ein LTI- oder LPV-System beschreiben und dient der Berechnung des zeitlichen Verhaltens der relevanten Ausgangsgröße $y(t)$ als Funktion der Zeit, etwa einer Temperatur $T$. Die Berechnung basiert auf einem vorherigen Systemzustand $x_0$ sowie einer Steuergröße $u$. Die Steuergröße $u$ kann auch als Eingangsgröße, Anregung oder Last bezeichnet werden. Das lineare oder linearisierbare Modell 31 berechnet unter verschiedenen Belastungsbedingungen $u(t)$ unter Berücksichtigung einer Systemdynamik 32 einen momentanen Systemzustand $x$ und prädiziert daraus den Wert der Ausgangsgröße $y$.

Figur 4 zeigt ein schematisches Blockdiagramm zur Erläuterung eines linearen Modells 41, etwa des oben beschriebenen linearen Modells 31. Das lineare Modell 41 wird hierzu in zwei Anteile zerlegt, nämlich ein erstes Modell 42 und ein zweites Modell 43.

Das erste Modell 42 dient der Berechnung des Verhaltens der Ausgangsgröße für den lastlosen (homogenen) Fall mit Anfangsbedingungen, d.h. eines transienten Abklingverhaltens aufgrund der Belastungsvorgeschichte, also unter der Annahme, dass in dem Zeitintervall das elektrische System 2 hinsichtlich der mindestens einen Steuergröße nicht belastet wird. Anhand des ersten Modells 42 kann der Wert der Ausgangsgröße zu dem Endzeitpunkt $t_1$ des vorgegebenen Zeitintervalls in Abhängigkeit von einem Istwert der Ausgangsgröße zu dem Anfangszeitpunkt $t_0$ des Zeitintervalls ermittelt werden, in Abhängigkeit davon, dass die Steuergröße innerhalb des Zeitintervalls den Wert Null annimmt.

Das zweite Modell 43 dient zur Berechnung einer Sprungantwort $\Phi(t)$, d.h. dem Verhalten der Ausgangsgröße bei Belastung mit einer einstellbarer Belastung innerhalb des Zeitintervalls und ohne Vorbelastung (Anfangsbedingung = 0). Das zweite Modell 43 berechnet somit ein Belastungsverhalten der mindestens einen Ausgangsgröße $y$ ohne Vorbelastung des elektrischen Systems 2 und unter der Annahme, dass in dem Zeitintervall eine einstellbare Belastung des elektrischen Systems 2 vorliegt, insbesondere ein Einheits-Lastsprung $H(t)$.

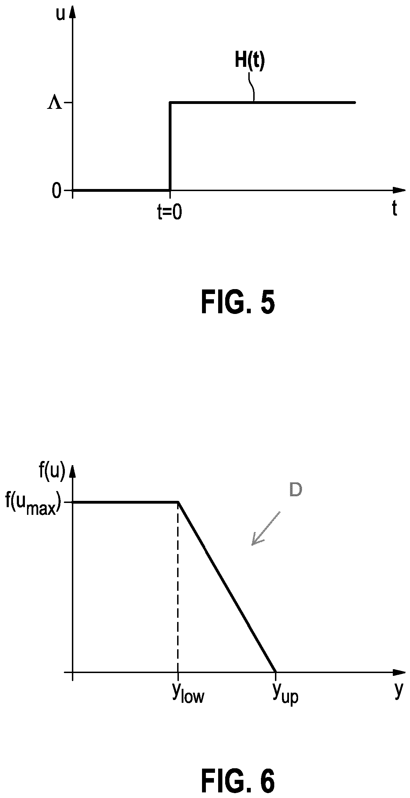

Figur 5 zeigt eine Darstellung eines beispielhaften skalierbaren Lastsprungs $H(t)$ als Funktion der Zeit $t$. Die Steuergröße (Belastung) $u$ springt von einem Wert 0 zum Startzeitpunkt $t = 0$ des vorgegebenen Zeitintervalls auf einen konstanten Wert $\Lambda$, wird also durch eine Heaviside-Funktion mit skalierbarem Vorfaktor A beschrieben.

Figur 6 zeigt eine schematische Illustration einer Derating-Kurve D zur Beschreibung des Derating-Verfahrens, d.h. eines Abregelzusammenhangs zwischen der zu limiterenden (schützenden) Ausgangsgröße $y$ (Zustand) und der ggf. zu reduzierenden Steuergröße $u$ (Belastungsgröße, z.B. Verlustleistung oder Phasenstrom). Hierbei ist eine von der Steuergröße u abhängige Funktion $f(u)$ aufgetragen, wobei im einfachsten Fall $f(u) = u$ gilt.

Sobald die zu schützende Ausgangsgröße $y$ (etwa die Temperatur einer Komponente des elektrischen Systems 2) einen unteren Schwellwert $y_{low}$ erreicht, sinkt der Wert der Funktion $f(u)$ vom Maximalwert $f(u_{max})$, bis er für einen oberen Schwellwert $y_{up}$ der Ausgangsgröße y den Wert 0 annimmt. Im einfachsten Fall ist das Verhalten in diesem Bereich linear. Zwischen den Schwellwerten $y_{low}$ und $y_{up}$ erfolgt somit ein Derating (Abregeln), d.h. die Last wird reduziert.

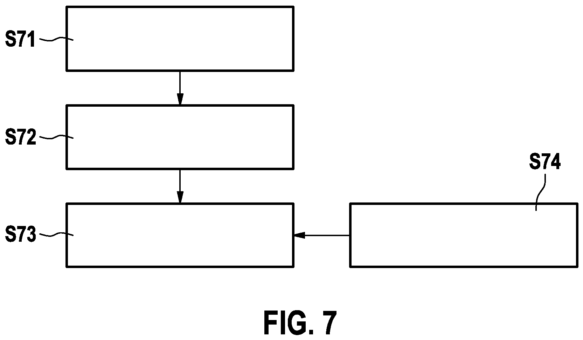

Figur 7 zeigt ein Flussdiagramm eines Verfahrens zum Bestimmen eines Werteverlaufs einer Steuergröße eines elektrischen Systems 2, welches wie oben beschrieben unter Verwendung eines vorgegebenen Derating-Verfahrens betrieben wird.

In einem ersten Verfahrensschritt S71 wird in Abhängigkeit von einem Istwert der Ausgangsgröße $y$ zu einem Anfangszeitpunkt des Zeitintervalls (d.h. von einem momentanen Systemzustand $x_0$) und in Abhängigkeit davon, dass die Steuergröße innerhalb des Zeitintervalls den Wert Null annimmt, ein Wert der Ausgangsgröße $y$ zu dem Endzeitpunkt $t_1$ des vorgegebenen Zeitintervalls ermittelt. Es wird somit eine ohne Belastung zur Verfügung stehende Reserve hinsichtlich der mindestens einen Ausgangsgröße $y$ berechnet, d.h. etwa eine Temperatur-Reserve $y_{resv}$.

In einem zweiten Verfahrensschritt S72 wird ein zulässiger Wert $u_{allowed}$ der Steuergröße $u$ berechnet, d.h. eine zulässige maximale Amplitude $u_{allowed}$ für eine Sprungfunktion als Eingangssignal, mit der während des Zeitraums eine Grenze $y_{limit}$ der Ausgangsgröße y gerade erreicht wird.

Falls die ermittelte zulässige Steuergröße $u_{allowed}$ für den Wert der Ausgangsgröße $y_{limit}$, bei dem das Derating startet, größer ist als die aufgrund anderer Systembegrenzungen mögliche Obergrenze $u_{max}$ ($u_{allowed} > u_{max}$), dann kann für die Prädiktion $u_{pred} = u_{max}$ verwendet werden.

Andernfalls werden die Schritte S71 und S72 wiederholt, um eine Arbeitskennlinie zu bestimmen, die den Zusammenhang der im Zeitraum erreichten Ausgangsgröße $y_{limit,n}$ und der zugehörigen Last $u_{allowed,n}$ beschreibt. Hierbei kann $n = 2$ sein, d. h. die Berechnung erfolgt für zwei Grenzwerte für y. Alternativ kann die Berechnung für mehrere Werte durchgeführt werden, d. h. $n > 2$, wobei beispielsweise eine Polynominterpolation oder Spline-Interpolation verwendet werden kann. Die Arbeitskennlinie kann z.B. linearisiert oder quadratisch beschrieben werden. Die Arbeitskennlinie ist eine Kurve der zulässigen Werte der Steuergröße.

Gegebenenfalls auftretende Spezialfälle werden geeignet abgefangen, falls etwa $u_{allowed} > u_{max}$ ist oder die Größe $y_{resv} < 0$ ist.

Aufgrund der Annahme/Voraussetzung eines linearen oder linearisierbaren dynamischen Systemverhaltens ist es möglich, in einer analytischen Rückwärtsrechnung genau die Eingangsanregung zu bestimmen, für die eine relevante Ausgangsgröße genau erreicht wird, anstatt mit einer frei wählbaren Höhe der Eingangsanregung (Verlustleistung) in einer Vorwärts-Modellierung auf die zugehörige Ausgangsgröße zu schließen.

Das dynamische System-Verhalten ist beschreibbar durch eine Differentialgleichung (DGL), wobei die Ausgangsgröße $y(t)$ die Lösung der DGL zu einer bekannten Steuergröße $u(t)$ ist. Die DGL hat die allgemeine Form:

$$a_n y^n + \cdots a_2 \ddot{y} + a_1 \dot{y} + a_0 y = b_m u^m + \cdots + b \ddot{u} + b_1 \dot{u} + b_0 u \,.$$

Die Lösung $y(t)$ setzt sich zusammen aus einer homogene Lösung $y_H(t)$ und einer partikulären Lösung $y_P(t)$:

$$y(t) = y_H(t) + y_p(t)$$

Ausgangspunkt ist ein Zielwert für $y(\Delta t_{pred}) = y_{limit}$ nach einem vorgegebenen (Prädiktions-)Zeitraum $\Delta t_{pred}$.

In einem Verfahrensschritt S74 wird die Randbedingung verwendet, dass die Belastung während des Zeitraums einer skalierten Sprungfunktion $u(t) = u \cdot H(t)$ entspricht, wobei $H$ eine Heaviside-Funktion mit Sprung bei $t_0$ bezeichnet.

Die partikuläre Lösung kann also mit Hilfe der Sprungantwort $\Phi(t)$ beschrieben werden:

$$y_p(t) = u \, \Phi(t).$$

Die homogene Lösung kann für einen bekannten Prädiktionszeitraum analytisch durch geeignete Diskretisierung beschrieben werden, sodass mit bekannten Anfangsbedingungen (in Form von zeitlichen Ableitungen aus der Vorgeschichte, oder Zuständen bei einer Zustandsraumbeschreibung) ein Abklingwert im Prädiktionszeitraum $y_H(\Delta t_{pred})$ berechenbar ist. In diesem Kontext lässt sich die obige Gleichung umschreiben zu:

$$y_{limit} = y_H\left(\Delta t_{pred}\right) + u \cdot \Phi\left(\Delta t_{pred}\right).$$

In einem Verfahrensschritt S73 lässt sich diese Gleichung nach der unbekannten Höhe des Belastungssprungs u auflösen:

$$\frac{y_{limit} - y_H\left(\Delta t_{pred}\right)}{\Phi\left(\Delta t_{pred}\right)} = u = u_{allowed} \,.$$

Das Verfahren ist direkt anwendbar, wenn die Eingangsgröße als Eingrößensystem beschreibbar ist, d.h. etwa die Verlustleistung, welche für die Ausgangstemperatur relevant ist. Eine Erweiterung auf ein Mehrgrößensystem mit einem linearen Gleichungssystem ist möglich.

Ein Schnittpunkt der Kurve bzw. Arbeitskennlinie und der Derating-Funktion $D$ liefert die prädizierte mögliche Last $u_{allowed}$. Der Wert $u_{pred}$ wird in eine für die Fahrstrategie nutzbare Größe übersetzt, etwa ein Drehmoment $tq_{pred}$ als Eingangsgröße für die Steuereinrichtung 24.

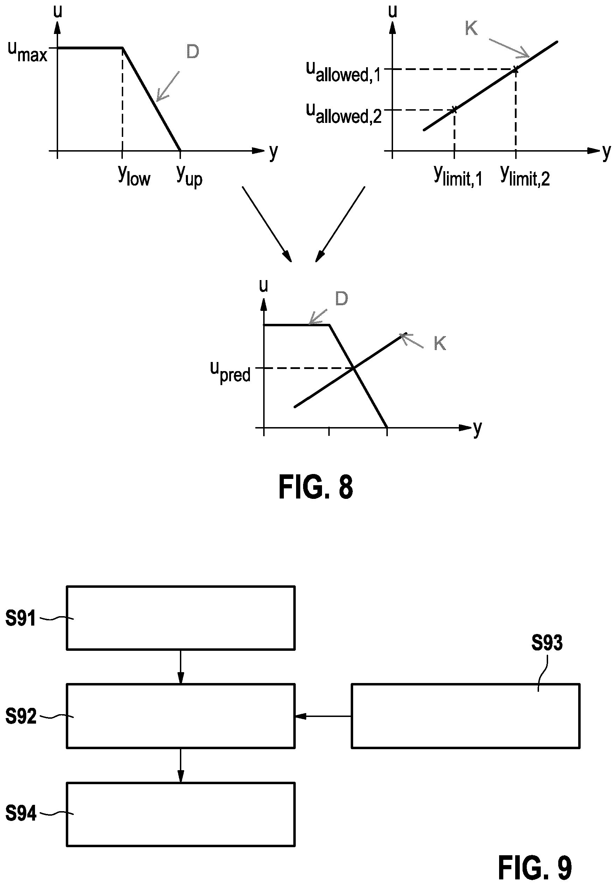

Figur 8 zeigt eine Erläuterung der Bestimmung der Steuergröße mittels der Berechnung eines Schnittpunkts einer Derating-Funktion $D$ und der ermittelten Kurve $K$. Die links oben eingezeichnete Derating-Funktion $D$ hat den in Figur 6 gezeigten Verlauf. Die rechts oben eingezeichnete Kurve $K$ verläuft linear, wobei zulässige Werte $u_{allowed,1}$ und $u_{allowed,2}$

der Steuergröße $u$ jeweiligen Schwellwerten $y_{limit,1}$ und $y_{limit,2}$ der Ausgangsgröße $y$ entsprechen. Ein Schnittpunkt der beiden Kurven $D$, $K$ gibt den Wert $u_{pred}$ der Steuergröße $u$. Ein zugehöriger Werteverlauf in dem Zeitintervall entspricht einem Sprung am Anfangszeitpunkt $t_0$ auf den ermittelten Wert $u_{pred}$ der Steuergröße $u$, welcher während des gesamten Zeitintervalls angenommen wird.

Figur 9 zeigt ein weiteres Flussdiagramm eines Verfahrens zum Bestimmen eines Werteverlaufs einer Steuergröße eines elektrischen Systems 2 gemäß einer Ausführungsform der Erfindung. Hierzu wird in einem ersten Verfahrensschritt S91 eine Derating-Funktion $D$ vorgegeben. In einem zweiten Verfahrensschritt S93 wird eine Arbeitskennlinie $K$ berechnet. In einem dritten Verfahrensschritt S92 wird anhand der Arbeitskennlinie $K$ und der Derating-Kennlinie $D$ der Wert $u_{pred}$ berechnet, wie oben genauer beschrieben. In einem vierten Verfahrensschritt S94 erfolgt eine Transformation in eine Ausgangsgröße für die Fahrstrategie, etwa ein Drehmoment $tq_{pred}$.

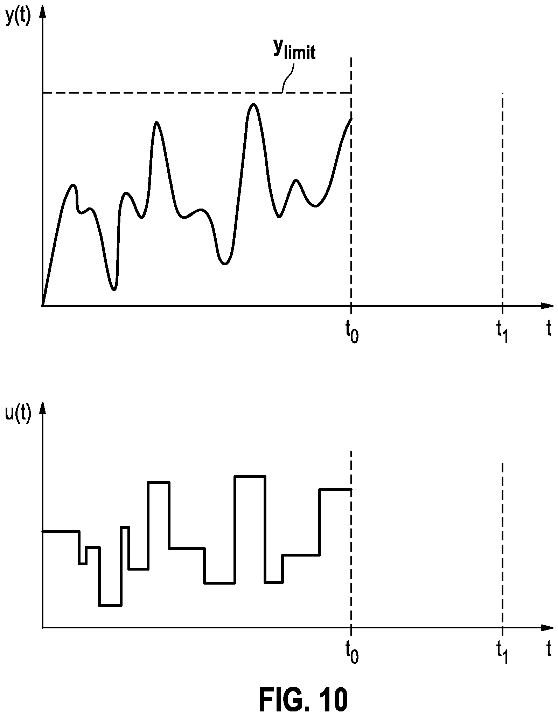

Figur 10 zeigt einen beispielhaften Verlauf einer Ausgangsgröße $y$ (Figur 10 oben) und einer Steuergröße $u$ (Figur 10 unten) bis zum Startzeitpunkt $t_0$ der Prädiktion, das heißt bis zum Anfangszeitpunkt $t_0$ des Zeitintervalls. Der Endzeitpunkt $t_1$ des Zeitintervalls ist ebenfalls eingezeichnet. Für die Ausgangsgröße ist ein Grenzwert $y_{limit}$ vorgegeben.

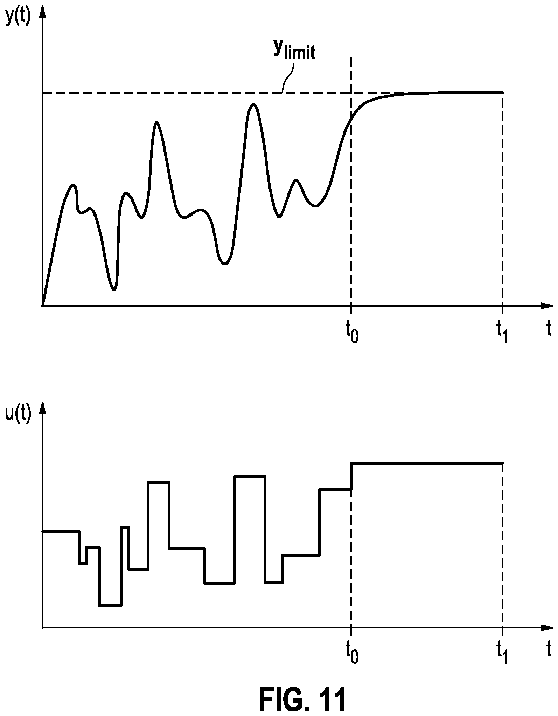

Figur 11 zeigt einen beispielhaften Verlauf einer Ausgangsgröße $y$ (Figur 11 oben) und einer Steuergröße $u$ (Figur 11 unten) mit einem mit dem erfindungsgemäßen Verfahren ermittelten Werteverlauf der Steuergröße u im vorgegebenen Zeitintervall.

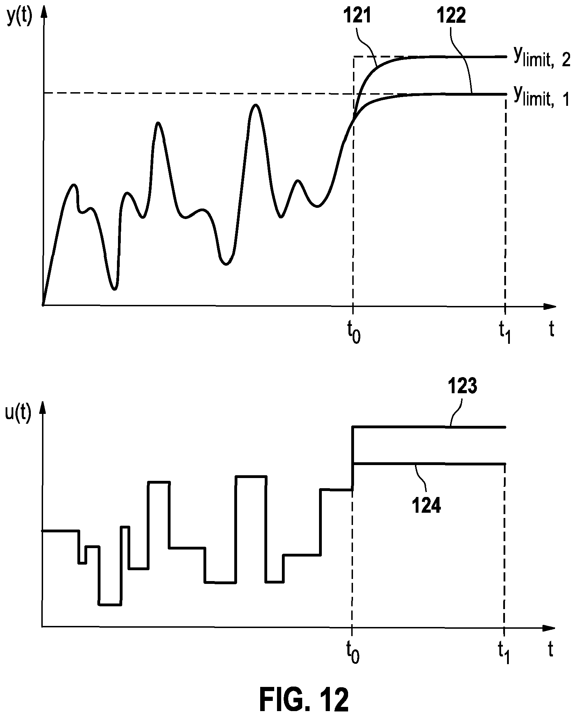

Figur 12 zeigt beispielhafte Verläufe 121, 122 einer Ausgangsgröße $y$ (Figur 12 oben) und Verläufe 123, 124 einer Steuergröße $u$ (Figur 12 unten) mit einem mit dem erfindungsgemäßen Verfahren ermittelten Werteverlauf der Steuergröße $u$ im vorgegebenen Zeitintervall für verschiedene Grenzwerte $y_{limit,1}$ und $y_{limit,2}$.

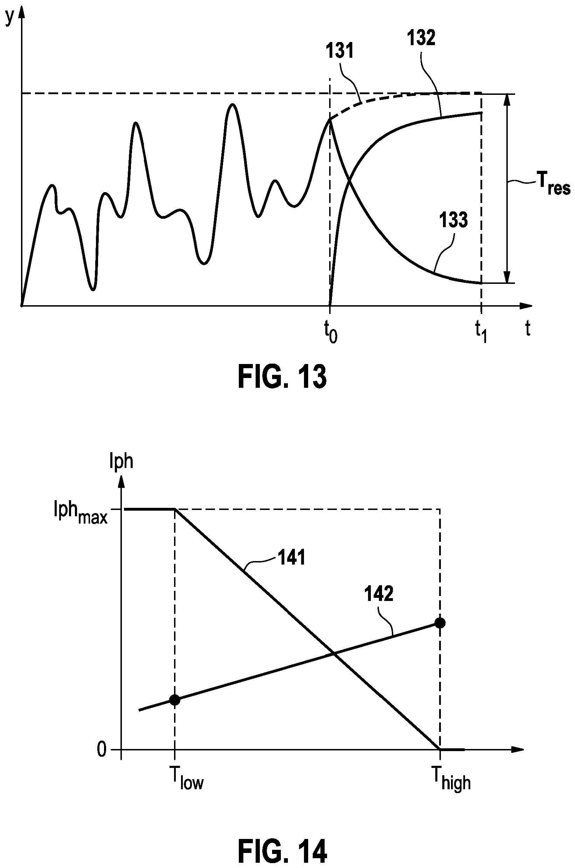

Figur 13 zeigt einen beispielhaften Verlauf einer Ausgangsgröße y als Funktion der Zeit $t$. Gezeigt sind die Beiträge aufgrund des Abklingverhaltens 133 und aufgrund eines Lastverhaltens 132. Die beiden Beiträge ergeben das Gesamtverhalten 131. Die Temperatur-Reserve $T_{res}$ wird optimal ausgenutzt.

Figur 14 zeigt eine Erläuterung der Bestimmung der Steuergröße mittels der Berechnung eines Schnittpunkts einer Derating-Funktion 141 und einer ermittelten Kurve 142 für den Fall eines Phasenstroms $Iph$. Eingezeichnet sind weiter der maximale Phasenstrom $Iph_{max}$ und die unteren und oberen Schwellenwerte der Temperatur, $T_{low}$ und $T_{high}$.

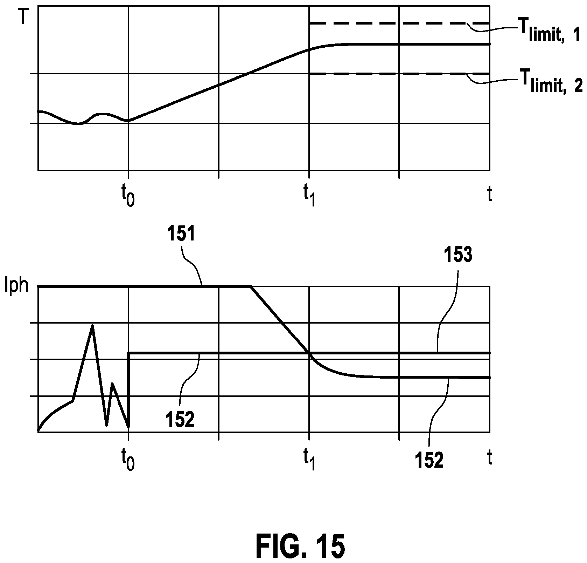

Figur 15 zeigt einen beispielhaften Verlauf einer Temperatur T (Figur 15 oben) mit Schwellwerten $T_{limit,1}$ und $T_{limit,2}$, entsprechend den Schwellwerten $T_{low}$ und $T_{high}$ für die Derating-Funktion 141 in Figur 14.

In Figur 15 unten sind der vorhergesagte bzw. erwünschte Phasenstrom 153 und der maximal zulässige Phasenstrom 151 eingezeichnet. Das tatsächliche Verhalten 152 des Phasenstroms ergibt sich, wenn ab dem Startzeitpunkt $t_0$ der ermittelte Werteverlauf eingestellt wird und ab dem Zeitpunkt $t_1$ das Derating greift und der tatsächliche Phasenstrom unterhalb des ermittelten liegt. Der Temperaturverlauf in Figur 15 entspricht dem Stromverlauf 152.

## Patentansprüche

1. Verfahren zum Bestimmen eines Werteverlaufs einer Steuergröße (u) eines elektrischen Systems (2) in einem vorgegebenen Zeitintervall,

   wobei das elektrische System eine zu limitierende Ausgangsgröße (y) aufweist, die sich mit einem linearen oder linearisierbaren Modell beschreiben lässt und für die eine Derating-Funktion (D) vorgegeben ist,
   und wobei das Zeitintervall einen Abklingvorgang im lastlosen Fall beschreibt, wobei das elektrische System (2) mit der Steuergröße (u) angesteuert wird und wobei sich aufgrund eines Systemverhaltens des elektrischen Systems (2) in Abhängigkeit von der Steuergröße (u) die Ausgangsgröße (y) in dem elektrischen System (2) einstellt, mit den Schritten:

   Ermitteln eines Wertes der Ausgangsgröße (y) zu einem Endzeitpunkt ($t_1$) des vorgegebenen Zeitintervalls, in Abhängigkeit von einem Istwert der Ausgangsgröße (y) zu einem Anfangszeitpunkt ($t_0$) des Zeitintervalls, und in Abhängigkeit davon, dass die Steuergröße (u) innerhalb des Zeitintervalls den Wert Null annimmt und somit das Zeitintervall einen Abklingvorgang im lastlosen Fall beschreibt;
   Ermitteln einer ersten Differenz eines ersten vorgegebenen Wertes ($y_{limit,1}$) der Ausgangsgröße (y) zum Endzeitpunkt ($t_1$) und des ermittelten Wertes der Ausgangsgröße (y) zu dem Endzeitpunkt ($t_1$);
   Ermitteln mindestens einer zweiten Differenz mindestens eines zweiten vorgegebenen Wertes ($y_{limit,2}$) der Ausgangsgröße (y) zum Endzeitpunkt ($t_1$) und des ermittelten Wertes der Ausgangsgröße (y) zu dem Endzeitpunkt ($t_1$);
   Vorgeben eines Werteverlaufs der Steuergröße (u) in dem Zeitintervall, wobei der Werteverlauf von einem Endwert zum Endzeitpunkt ($t_1$) abhängt und durch Angabe des Endwerts eindeutig bestimmt ist;
   Ermitteln eines ersten zulässigen Wertes ($u_{allowed,1}$) der Steuergröße (u) derart, dass beim Ansteuern des elektrischen Systems (2) der Wert der Ausgangsgröße (y) zu dem Endzeitpunkt ($t_1$) gleich der ermittelten

ersten Differenz ist, in Abhängigkeit davon, dass die Steuergröße (u) innerhalb des Zeitintervalls den vorgegebenen Werteverlauf annimmt, wobei der Endwert gleich dem ersten zulässigen Wert (u$_{allowed,1}$) ist; Ermitteln mindestens eines zweiten zulässigen Wertes (u$_{allowed,2}$) der Steuergröße (u) derart, dass beim Ansteuern des elektrischen Systems (2) der Wert der Ausgangsgröße (y) zu dem Endzeitpunkt (t$_1$) gleich der ermittelten zweiten Differenz ist, in Abhängigkeit davon, dass die Steuergröße (u) innerhalb des Zeitintervalls den vorgegebenen Werteverlauf annimmt, wobei der Endwert gleich dem zweiten zulässigen Wert (u$_{allowed,2}$) ist;

Ermitteln einer Kurve (K) der zulässigen Werte der Steuergröße (u) in Abhängigkeit von der Ausgangsgröße (y), anhand des ersten zulässigen Wertes (u$_{allowed,1}$) der Steuergröße (u) für den ersten vorgegebenen Wert (y$_{limit,1}$) der Ausgangsgröße (y) und anhand des mindestens einen zweiten zulässigen Wertes (u$_{allowed,2}$) der Steuergröße (u) für den mindestens einen zweiten vorgegebenen Wert (y$_{limit,2}$) der Ausgangsgröße (y);

Ermitteln eines Schnittpunkts der ermittelten Kurve (K) und der vorgegebenen Derating-Funktion (D), wobei die Derating-Funktion (D) eine in einem Derating-Verfahren maximal zulässige Steuergröße (u$_{max}$) in Abhängigkeit von der Ausgangsgröße (y) beschreibt; und

Bestimmen des Werteverlaufs der Steuergröße (u) innerhalb des Zeitintervalls als denjenigen Werteverlauf, für den der Endwert des Werteverlaufs den Wert (u$_{pred}$) der Steuergröße (u) im Schnittpunkt annimmt.

2.  Verfahren nach Anspruch 1, wobei die Kurve der zulässigen Werte der Steuergröße (u) durch Interpolation des ersten zulässigen Wertes (u$_{allowed,1}$) der Steuergröße (u) für den ersten vorgegebenen Wert (y$_{limit,1}$) der Ausgangsgröße (y) und des mindestens einen zweiten zulässigen Wertes (u$_{allowed,2}$) der Steuergröße (u) für den mindestens einen zweiten vorgegebenen Wert (y$_{limit,2}$) der Ausgangsgröße (y) ermittelt wird.

3.  Verfahren nach Anspruch 1 oder 2, wobei die Abhängigkeit der Ausgangsgröße (y) von der Steuergröße (u) durch ein lineares oder linearisierbares Modell beschrieben wird.

4.  Verfahren nach Anspruch 3, wobei der Werteverlauf sprunghaft ist, und wobei für einen vorgegebenen Wert der Ausgangsgröße (y) der zulässige Wert $u_{allowed}$ der Steuergröße (u) durch folgende Formel berechnet wird:

$$u_{allowed} = \frac{\Delta y}{\Phi(t_1)},$$

wobei $\Delta y$ die ermittelte Differenz und $\Phi(t_1)$ der Wert einer dem linearen oder linearisierbaren Modell zugeordneten Sprungantwort zum Endzeitpunkt $t_1$ ist.

5.  Verfahren nach einem der vorangehenden Ansprüche, wobei die Steuergröße (u) kleiner als ein aufgrund von Systembegrenzungen des elektrischen Systems (2) vorgegebener Schwellenwert ist, und wobei der Werteverlauf der Steuergröße (u) innerhalb des Zeitintervalls als derjenige Werteverlauf bestimmt wird, für den der Endwert des Werteverlaufs den vorgegebenen Schwellenwert annimmt, falls der erste zulässige Wert (u$_{allowed,1}$) der Steuergröße (u) und der mindestens eine der zweite zulässige Wert (u$_{allowed,2}$) der Steuergröße (u) größer als der vorgegebene Schwellenwert ist.

6.  Verfahren nach einem der vorangehenden Ansprüche, wobei das elektrische System (2) ein elektrischer Antrieb ist, und wobei die mindestens eine Ausgangsgröße (y) eine Temperatur von mindestens einer Komponente des elektrischen Systems (2) umfasst.

7.  Verfahren nach Anspruch 6, wobei ein Phasenstrom oder Drehmoment des elektrischen Antriebs in Abhängigkeit von dem bestimmten Werteverlauf der Steuergröße (u) gesteuert wird.

8.  Vorrichtung (1) zum Bestimmen eines Werteverlaufs einer Steuergröße (u) eines elektrischen Systems (2) in einem vorgegebenen Zeitintervall,

    wobei das elektrische System eine zu limitierende Ausgangsgröße (y) aufweist, die sich mit einem linearen oder linearisierbaren Modell beschreiben lässt und für die eine Derating-Funktion (D) vorgegeben ist und und wobei das Zeitintervall einen Abklingvorgang im lastlosen Fall beschreibt,
    wobei das elektrische System (2) mit der Steuergröße (u) ansteuerbar ist und wobei sich aufgrund eines Systemverhaltens des elektrischen Systems (2) in Abhängigkeit von der Steuergröße (u) die Ausgangsgröße (y) in dem elektrischen System (2) einstellt, mit:

einer Recheneinrichtung (11), welche dazu ausgebildet ist,

- einen Wert der Ausgangsgröße (y) zu einem Endzeitpunkt ($t_1$) des vorgegebenen Zeitintervalls zu ermitteln, in Abhängigkeit von einem Istwert der Ausgangsgröße (y) zu einem Anfangszeitpunkt ($t_0$) des Zeitintervalls, und in Abhängigkeit davon, dass die Steuergröße (u) innerhalb des Zeitintervalls den Wert Null annimmt, und somit das Zeitintervall einen Abklingvorgang im lastlosen Fall beschreibt,
- eine erste Differenz eines ersten vorgegebenen Wertes ($y_{limit,1}$) der Ausgangsgröße (y) zum Endzeitpunkt ($t_1$) und des ermittelten Wertes der Ausgangsgröße (y) zu dem Endzeitpunkt ($t_1$) zu ermitteln,
- mindestens eine zweite Differenz mindestens eines zweiten vorgegebenen Wertes ($y_{limit,2}$) der Ausgangsgröße (y) zum Endzeitpunkt ($t_1$) und des ermittelten Wertes der Ausgangsgröße (y) zu dem Endzeitpunkt ($t_1$) zu ermitteln,
- einen Werteverlauf der Steuergröße (u) in dem Zeitintervall vorzugeben, wobei der Werteverlauf von einem Endwert zum Endzeitpunkt ($t_1$) abhängt und durch Angabe des Endwerts eindeutig bestimmt ist,
- einen ersten zulässigen Wert ($u_{allowed,1}$) der Steuergröße (u) derart zu ermitteln, dass beim Ansteuern des elektrischen Systems (2) der Wert der Ausgangsgröße (y) zu dem Endzeitpunkt ($t_1$) gleich der ermittelten ersten Differenz ist, in Abhängigkeit davon, dass die Steuergröße (u) innerhalb des Zeitintervalls den vorgegebenen Werteverlauf annimmt, wobei der Endwert gleich dem ersten zulässigen Wert ($u_{allowed,1}$) ist;
- mindestens einen zweiten zulässigen Wert ($u_{allowed,2}$) der Steuergröße (u) derart zu ermitteln, dass beim Ansteuern des elektrischen Systems (2) der Wert der Ausgangsgröße (y) zu dem Endzeitpunkt ($t_1$) gleich der ermittelten zweiten Differenz ist, in Abhängigkeit davon, dass die Steuergröße (u) innerhalb des Zeitintervalls den vorgegebenen Werteverlauf annimmt, wobei der Endwert gleich dem zweiten zulässigen Wert ($u_{allowed,2}$) ist;
- eine Kurve (K) der zulässigen Werte der Steuergröße (u) in Abhängigkeit von der Ausgangsgröße (y) zu ermitteln, anhand des ersten zulässigen Wertes ($u_{allowed,1}$) der Steuergröße (u) für den ersten vorgegebenen Wert ($y_{limit,1}$) der Ausgangsgröße (y) und anhand des mindestens einen zweiten zulässigen Wertes ($u_{allowed,2}$) der Steuergröße (u) für den mindestens einen zweiten vorgegebenen Wert ($y_{limit,2}$) der Ausgangsgröße (y);
- einen Schnittpunkt der ermittelten Kurve (K) und der vorgegebenen Derating-Funktion (D) zu ermitteln, wobei die Derating-Funktion (D) eine in einem Derating-Verfahren maximal zulässige Steuergröße ($u_{max}$) in Abhängigkeit von der Ausgangsgröße (y) beschreibt; und
- den Werteverlauf der Steuergröße (u) innerhalb des Zeitintervalls als denjenigen Werteverlauf zu bestimmen, für den der Endwert des Werteverlaufs den Wert ($u_{pred}$) der Steuergröße (u) im Schnittpunkt annimmt; und

einer Schnittstelle (12), welche dazu ausgebildet ist, den bestimmten Werteverlauf der Steuergröße (u) zum Steuern des elektrischen Systems (2) auszugeben.

9. Vorrichtung (1) nach Anspruch 8, wobei die Recheneinrichtung (11) dazu ausgebildet ist, die Kurve der zulässigen Werte der Steuergröße (u) durch Interpolation des ersten zulässigen Wertes ($u_{allowed,1}$) der Steuergröße (u) für den ersten vorgegebenen Wert ($y_{limit,1}$) der Ausgangsgröße (y) und des mindestens einen zweiten zulässigen Wertes ($u_{allowed,2}$) der Steuergröße (u) für den mindestens einen zweiten vorgegebenen Wert ($y_{limit,2}$) der Ausgangsgröße (y) zu ermitteln.

10. Elektrisches System (2), mit:

einer Vorrichtung (1) zum Bestimmen eines Werteverlaufs einer Steuergröße (u) des elektrischen Systems (2) nach Anspruch 8 oder 9; und
einer Steuereinrichtung (24), welche dazu ausgebildet ist, das elektrische System (2) innerhalb des Zeitintervalls in Abhängigkeit von dem bestimmten Werteverlauf der Steuergröße (u) zu steuern.

## Claims

1. Method for determining a value profile of a control variable (u) of an electrical system (2) at a predefined time interval,

wherein the electrical system has an output variable (y) which is to be limited, which can be described with a linear or linearizable model and for which a derating function (D) is predefined,

and wherein the time interval describes a decay process in the load-free case,
wherein the electrical system (2) is controlled with the control variable (u), and wherein, due to a system behaviour of the electrical system (2), the output variable (y) in the electrical system (2) is set on the basis of the control variable (u), with the steps of:

determining a value of the output variable (y) at an end time ($t_1$) of the predefined time interval on the basis of an actual value of the output variable (y) at a start time ($t_0$) of the time interval and on the basis of the fact that the control variable (u) assumes the value of zero within the time interval and the time interval thus describes a decay process in the load-free case;

determining a first difference between a first predefined value ($y_{limit,1}$) of the output variable (y) at the end time ($t_1$) and the determined value of the output variable (y) at the end time ($t_1$);

determining at least one second difference between at least one second predefined value ($y_{limit,2}$) of the output variable (y) at the end time ($t_1$) and the determined value of the output variable (y) at the end time ($t_1$);

predefining a value profile of the control variable (u) in the time interval, wherein the value profile depends on a final value at the end time ($t_1$) and is clearly determined by specifying the final value;

determining a first permissible value ($u_{allowed,1}$) of the control variable (u) such that, when controlling the electrical system (2), the value of the output variable (y) at the end time ($t_1$) is equal to the determined first difference on the basis of the fact that the control variable (u) assumes the predefined value profile within the time interval, wherein the final value is equal to the first permissible value ($u_{allowed,1}$),

determining at least one second permissible value ($u_{allowed,2}$) of the control variable (u) such that, when controlling the electrical system (2), the value of the output variable (y) at the end time ($t_1$) is equal to the determined second difference on the basis of the fact that the control variable (u) assumes the predefined value profile within the time interval, wherein the final value is equal to the second permissible value ($u_{allowed,2}$);

determining a curve (K) of the permissible values of the control variable (u) on the basis of the output variable (y) using the first permissible value ($u_{allowed,1}$) of the control variable (u) for the first predefined value ($y_{limit,1}$) of the output variable (y) and using the at least one second permissible value ($u_{allowed,2}$) of the control variable (u) for the at least one second predefined value ($y_{limit,2}$) of the output variable (y);

determining a point of intersection of the determined curve (K) and the predefined derating function (D), wherein the derating function (D) describes a maximum permissible control variable ($u_{max}$) in a derating method on the basis of the output variable (y); and

determining the value profile of the control variable (u) within the time interval as that value profile for which the final value of the value profile assumes the value ($u_{pred}$) of the control variable (u) at the point of intersection.

2. Method according to Claim 1, wherein the curve of the permissible values of the control variable (u) is determined by interpolating the first permissible value ($u_{allowed,1}$) of the control variable (u) for the first predefined value ($y_{limit,1}$) of the output variable (y) and the at least one second permissible value ($u_{al-lowed,2}$) of the control variable (u) for the at least one second predefined value ($y_{limit,2}$) of the output variable (y).

3. Method according to Claim 1 or 2, wherein the dependence of the output variable (y) on the control variable (u) is described by a linear or linearizable model.

4. Method according to Claim 3, wherein the value profile is erratic, and wherein, for a predefined value of the output variable (y), the permissible value $u_{al-lowed}$ of the control variable (u) is calculated by means of the following formula:

$$u_{allowed} = \frac{\Delta y}{\Phi(t_1)},$$

where $\Delta y$ is the determined difference and $\Phi(t_1)$ is the value of a step response assigned to the linear or linearizable model at the end time $t_1$.

5. Method according to one of the preceding claims, wherein the control variable (u) is less than a threshold value predefined on the basis of system limitations of the electrical system (2), and wherein the value profile of the control variable (u) within the time interval is determined as that value profile for which the final value of the value profile assumes the predefined threshold value if the first permissible value ($u_{allowed,1}$) of the control variable (u) and the at least one second permissible value ($u_{allowed,2}$) of the control variable (u) is greater than the predefined threshold value.

6. Method according to one of the preceding claims, wherein the electrical system (2) is an electric drive, and wherein the at least one output variable (y) comprises a temperature of at least one component of the electrical system (2).

7. Method according to Claim 6, wherein a phase current or torque of the electric drive is controlled on the basis of the determined value profile of the control variable (u).

8. Apparatus (1) for determining a value profile of a control variable (u) of an electrical system (2) in a predefined time interval,

wherein the electrical system has an output variable (y) which is to be limited, which can be described with a linear or linearizable model and for which a derating function (D) is predefined,
and wherein the time interval describes a decay process in the load-free case,
wherein the electrical system (2) can be controlled with the control variable (u), and
wherein, due to a system behaviour of the electrical system (2), the output variable (y) in the electrical system (2) is set on the basis of the control variable (u), having:

a computing device (11) which is designed

- to determine a value of the output variable (y) at an end time ($t_1$) of the predefined time interval on the basis of an actual value of the output variable (y) at a start time ($t_0$) of the time interval and on the basis of the fact that the control variable (u) assumes the value of zero within the time interval and the time interval thus describes a decay process in the load-free case,
- to determine a first difference between a first predefined value ($y_{limit,1}$) of the output variable (y) at the end time ($t_1$) and the determined value of the output variable (y) at the end time ($t_1$),
- to determine at least one second difference between at least one second predefined value ($y_{limit,2}$) of the output variable (y) at the end time ($t_1$) and the determined value of the output variable (y) at the end time ($t_1$),
- to predefine a value profile of the control variable (u) in the time interval, wherein the value profile depends on a final value at the end time ($t_1$) and is clearly determined by specifying the final value,
- to determine a first permissible value ($u_{allowed,1}$) of the control variable (u) such that, when controlling the electrical system (2), the value of the output variable (y) at the end time ($t_1$) is equal to the determined first difference on the basis of the fact that the control variable (u) assumes the predefined value profile within the time interval, wherein the final value is equal to the first permissible value ($u_{allowed,1}$);
- to determine at least one second permissible value ($u_{allowed,2}$) of the control variable (u) such that, when controlling the electrical system (2), the value of the output variable (y) at the end time ($t_1$) is equal to the determined second difference on the basis of the fact that the control variable (u) assumes the predefined value profile within the time interval, wherein the final value is equal to the second permissible value ($u_{allowed,2}$);
- to determine a curve (K) of the permissible values of the control variable (u) on the basis of the output variable (y) using the first permissible value ($u_{al-lowed,1}$) of the control variable (u) for the first predefined value ($y_{limit,1}$) of the output variable (y) and using the at least one second permissible value ($u_{al-lowed,2}$) of the control variable (u) for the at least one second predefined value ($y_{limit,2}$) of the output variable (y);
- to determine a point of intersection of the determined curve (K) and the predefined derating function (D), wherein the derating function (D) describes a maximum permissible control variable ($u_{max}$) in a derating method on the basis of the output variable (y); and
- to determine the value profile of the control variable (u) within the time interval as that value profile for which the final value of the value profile assumes the value ($u_{pred}$) of the control variable (u) at the point of intersection; and

an interface (12) which is designed to output the determined value profile of the control variable (u) for controlling the electrical system (2).

9. Apparatus (1) according to Claim 8, wherein the computing device (11) is designed to determine the curve of the permissible values of the control variable (u) by interpolating the first permissible value ($u_{allowed,1}$) of the control variable (u) for the first predefined value ($y_{limit,1}$) of the output variable (y) and the at least one second permissible value ($u_{allowed,2}$) of the control variable (u) for the at least one second predefined value ($y_{limit,2}$) of the output variable (y).

**10.** Electrical system (2) having:

an apparatus (1) for determining a value profile of a control variable (u) of the electrical system (2) according to Claim 8 or 9; and
a control device (24) which is designed to control the electrical system (2) within the time interval on the basis of the determined value profile of the control variable (u).


**Revendications**

**1.** Procédé de spécification d'un profil de valeur d'une grandeur de commande (u) d'un système électrique (2) dans un intervalle de temps prédéfini,

le système électrique présentant une grandeur de sortie (y) à limiter, laquelle peut être décrite avec un modèle linéaire ou linéarisable et pour laquelle une fonction de déclassement (D) est prédéfinie,
et l'intervalle de temps décrivant un processus de décroissance dans le cas sans charge,
le système électrique (2) étant commandé par la grandeur de commande (u) et la grandeur de sortie (y) s'établissant dans le système électrique (2) en raison d'un comportement de système du système électrique (2) en fonction de la grandeur de commande (u), comprenant les étapes suivantes :
détermination d'une valeur de la grandeur de sortie (y) à un instant final ($t_1$) de l'intervalle de temps prédéfini, en fonction d'une valeur réelle de la grandeur de sortie (y) à un instant initial ($t_0$) de l'intervalle de temps, et en fonction du fait que la grandeur de commande (u) prend la valeur zéro à l'intérieur de l'intervalle de temps et que l'intervalle de temps décrit ainsi un processus de décroissance dans le cas sans charge ;
détermination d'une première différence entre une première valeur prédéfinie ($y_{li-mit,1}$) de la grandeur de sortie (y) à l'instant final ($t_1$) et la valeur déterminée de la grandeur de sortie (y) à l'instant final ($t_1$) ;
détermination d'au moins une deuxième différence d'au moins une deuxième valeur prédéfinie ($y_{limit,2}$) de la grandeur de sortie (y) à l'instant final ($t_1$) et la valeur déterminée de la grandeur de sortie (y) à l'instant final ($t_1$) ;
prédéfinition d'un profil de valeur de la grandeur de commande (u) dans l'intervalle de temps, le profil de valeur dépendant d'une valeur finale à l'instant final ($t_1$) et étant spécifiée de manière univoque par l'indication de la valeur finale ;
détermination d'une première valeur admissible ($u_{allowed,1}$) de la grandeur de commande (u) de telle sorte que, lors de la commande du système électrique (2), la valeur de la grandeur de sortie (y) à l'instant final ($t_1$) est égale à la première différence déterminée, en fonction du fait que la grandeur de commande (u) adopte le profil de valeur prédéfini à l'intérieur de l'intervalle de temps, la valeur finale étant égale à la première valeur admissible ($u_{allowed,1}$),
détermination d'au moins une deuxième valeur admissible ($u_{allowed,2}$) de la grandeur de commande (u) de telle sorte que, lors de la commande du système électrique (2), la valeur de la grandeur de sortie (y) à l'instant final ($t_1$) est égale à la deuxième différence déterminée, en fonction du fait que la grandeur de commande (u) adopte le profil de valeur prédéfini à l'intérieur de l'intervalle de temps, la valeur finale étant égale à la deuxième valeur admissible ($u_{allowed,2}$) ;
détermination d'une courbe (K) des valeurs autorisées de la grandeur de commande (u) en fonction de la grandeur de sortie (y), à l'aide de la première valeur autorisée ($u_{allowed,1}$) de la grandeur de commande (u) pour la première valeur prédéfinie ($y_{limit,1}$) de la grandeur de sortie (y) et à l'aide de l'au moins une deuxième valeur autorisée ($u_{allowed,2}$) de la grandeur de commande (u) pour l'au moins une deuxième valeur prédéterminée ($y_{limit,2}$) de la grandeur de sortie (y) ;
détermination d'un point d'intersection de la courbe (K) déterminée et de la fonction de déclassement (D) prédéfinie, la fonction de déclassement (D) décrivant une grandeur de commande maximale ($u_{max}$) autorisée dans un procédé de déclassement en fonction de la grandeur de sortie (y) ; et
spécification du profil de valeur de la grandeur de commande (u) à l'intérieur de l'intervalle de temps comme étant le profil de valeur pour lequel la valeur finale du profil de valeur adopte la valeur ($u_{pred}$) de la grandeur de commande (u) au point d'intersection.

**2.** Procédé selon la revendication 1, la courbe des valeurs autorisées de la grandeur de commande (u) étant déterminée par interpolation de la première valeur autorisée ($u_{allowed,1}$) de la grandeur de commande (u) pour la première valeur prédéfinie ($y_{limit,1}$) de la grandeur de sortie (y) et de l'au moins une deuxième valeur autorisée ($u_{allowed,2}$) de la grandeur de commande (u) pour l'au moins une deuxième valeur prédéfinie ($y_{limit,2}$) de la grandeur de sortie (y).

**3.** Procédé selon la revendication 1 ou 2, la dépendance de la grandeur de sortie (y) à la grandeur de commande (u) étant décrite par un modèle linéaire ou linéarisable.

4. Procédé selon la revendication 3, le profil de valeur étant discontinu et, pour une valeur prédéfinie de la grandeur de sortie (y), la valeur autorisée $u_{allowed}$ de la grandeur de commande (u) étant calculée par la formule suivante :

$$u_{allowed} = \frac{\Delta y}{\Phi(t_1)},$$

où $\Delta y$ désigne la différence déterminée et $\Phi(t_1)$ la valeur d'une réponse indicielle associée au modèle linéaire ou linéarisable à l'instant final $t_1$.

5. Procédé selon l'une des revendications précédentes, la grandeur de commande (u) étant inférieure à une valeur de seuil prédéfinie en raison de limitations de système du système électrique (2), et le profil de valeur de la grandeur de commande (u) à l'intérieur de l'intervalle de temps étant spécifié comme étant le profil de valeur pour lequel la valeur finale du profil de valeur adopte la valeur de seuil prédéfinie, dans le cas où la première valeur autorisée ($u_{allowed,1}$) de la grandeur de commande (u) et l'au moins une des deuxièmes valeurs autorisées ($u_{allowed,2}$) de la grandeur de commande (u) sont supérieures à la valeur de seuil prédéterminée.

6. Procédé selon l'une des revendications précédentes, le système électrique (2) étant un entraînement électrique, et l'au moins une grandeur de sortie (y) comprenant une température d'au moins un composant du système électrique (2).

7. Procédé selon la revendication 6, un courant de phase ou un couple de l'entraînement électrique étant commandé en fonction du profil de valeur spécifié de la grandeur de commande (u).

8. Arrangement (1) de spécification d'un profil de valeur d'une grandeur de commande (u) d'un système électrique (2) dans un intervalle de temps prédéfini,

le système électrique présentant une grandeur de sortie (y) à limiter, laquelle peut être décrite avec un modèle linéaire ou linéarisable et pour laquelle une fonction de déclassement (D) est prédéfinie
et l'intervalle de temps décrivant un processus de décroissance dans le cas sans charge,
le système électrique (2) pouvant être commandé par la grandeur de commande (u) et
la grandeur de sortie (y) s'établissant dans le système électrique (2) en raison d'un comportement de système du système électrique (2) en fonction de la grandeur de commande (u), comprenant :
un dispositif de calcul (11), lequel est configuré pour

- déterminer une valeur de la grandeur de sortie (y) à un instant final ($t_1$) de l'intervalle de temps prédéfini, en fonction d'une valeur réelle de la grandeur de sortie (y) à un instant initial ($t_0$) de l'intervalle de temps, et en fonction du fait que la grandeur de commande (u) prend la valeur zéro à l'intérieur de l'intervalle de temps et que l'intervalle de temps décrit ainsi un processus de décroissance dans le cas sans charge,
- déterminer une première différence entre une première valeur prédéfinie ($y_{li-mit,1}$) de la grandeur de sortie (y) à l'instant final ($t_1$) et la valeur déterminée de la grandeur de sortie (y) à l'instant final ($t_1$),
- déterminer au moins une deuxième différence d'au moins une deuxième valeur prédéfinie ($y_{limit,2}$) de la grandeur de sortie (y) à l'instant final ($t_1$) et la valeur déterminée de la grandeur de sortie (y) à l'instant final ($t_1$),
- prédéfinir un profil de valeur de la grandeur de commande (u) dans l'intervalle de temps, le profil de valeur dépendant d'une valeur finale à l'instant final ($t_1$) et étant spécifié de manière univoque par l'indication de la valeur finale,
- déterminer une première valeur admissible ($u_{allowed,1}$) de la grandeur de commande (u) de telle sorte que, lors de la commande du système électrique (2), la valeur de la grandeur de sortie (y) à l'instant final ($t_1$) est égale à la première différence déterminée, en fonction du fait que la grandeur de commande (u) adopte le profil de valeur prédéfini à l'intérieur de l'intervalle de temps, la valeur finale étant égale à la première valeur admissible ($u_{allowed,1}$) ;
- déterminer au moins une deuxième valeur admissible ($u_{allowed,2}$) de la grandeur de commande (u) de telle sorte que, lors de la commande du système électrique (2), la valeur de la grandeur de sortie (y) à l'instant final ($t_1$) est égale à la deuxième différence déterminée, en fonction du fait que la grandeur de commande (u) adopte le profil de valeur prédéfini à l'intérieur de l'intervalle de temps, la valeur finale étant égale à la deuxième valeur admissible ($u_{allowed,2}$) ;

- déterminer une courbe (K) des valeurs autorisées de la grandeur de commande (u) en fonction de la grandeur de sortie (y), à l'aide de la première valeur autorisée ($u_{allowed,1}$) de la grandeur de commande (u) pour la première valeur prédéfinie ($y_{limit,1}$) de la grandeur de sortie (y) et à l'aide de l'au moins une deuxième valeur autorisée ($u_{allowed,2}$) de la grandeur de commande (u) pour l'au moins une deuxième valeur prédéterminée ($y_{limit,2}$) de la grandeur de sortie (y) ;

- déterminer un point d'intersection de la courbe (K) déterminée et de la fonction de déclassement (D) prédéfinie, la fonction de déclassement (D) décrivant une grandeur de commande maximale ($u_{max}$) autorisée dans un procédé de déclassement en fonction de la grandeur de sortie (y) ; et

- spécifier le profil de valeur de la grandeur de commande (u) à l'intérieur de l'intervalle de temps comme étant le profil de valeur pour lequel la valeur finale du profil de valeur adopte la valeur ($u_{pred}$) de la grandeur de commande (u) au point d'intersection ; et

une interface (12), laquelle est configurée pour émettre le profil de valeur spécifié de la grandeur de commande (u) pour commander le système électrique (2).

9. Arrangement (1) selon la revendication 8, l'unité de calcul (11) étant configurée pour déterminer la courbe des valeurs autorisées de la grandeur de commande (u) par interpolation de la première valeur autorisée ($u_{allowed,1}$) de la grandeur de commande (u) pour la première valeur prédéfinie ($y_{limit,1}$) de la grandeur de sortie (y) et de l'au moins une deuxième valeur autorisée ($u_{al\text{-}lowed,2}$) de la grandeur de commande (u) pour l'au moins une deuxième valeur prédéfinie ($y_{limit,2}$) de la grandeur de sortie (y).

10. Système électrique (2), comprenant :

un arrangement (1) de spécification d'un profil de valeur d'une grandeur de commande (u) du système électrique (2) selon la revendication 8 ou 9 ; et

un dispositif de commande (24), lequel est configuré pour commander le système électrique (2) à l'intérieur de l'intervalle de temps en fonction du profil de valeur spécifié de la grandeur de commande (u).

**FIG. 1**

**FIG. 2**

**FIG. 3**

**FIG. 4**

**FIG. 5**

**FIG. 6**

S71

S72

S74

S73

# FIG. 7

FIG. 8

FIG. 9

FIG. 10

FIG. 11

**FIG. 12**

**FIG. 13**

**FIG. 14**

**FIG. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016220536 A1
- US 10151301 B2

- WO 2019219214 A1

**In der Beschreibung aufgeführte Nicht-Patentliteratur**

- **WALLSCHEID et al.** Derating of Automotive Drive Systems Using Model Predictive Control. *4th Symposium on Predictive Control of Electrical Drives and Power Electronics*, 2017